# EUROPEAN PATENT APPLICATION

(11) **EP 1 081 614 A2**
(43) Date of publication of application: **07.03.2001**
(21) Application number: 00118171.8
(22) Date of filing: 30.08.2000
(51) Int. Cl.: G06F 17/60

(54) **Dynamic order visibility system for the trading of assets**

(30) Priority: 31.08.1999 US 386436
(71) Applicant: Intelligent Markets, Inc., San Francisco, CA 94103 (US)
(72) Inventor: Huttenlocher, Carl, San Francisco CA 94110 (US); Topaz, Jason Andrew, San Francisco CA 94110 (US)
(74) Representative: UEXKÜLL & STOLBERG

(57) **Abstract**

The disclosed invention is a new method and mechanism for a marketplace of buyers and sellers of any asset, and in particular financial instruments. The invention includes a user specified, computer-aided control over the visibility and matching of buy and sell orders. In a marketplace, particularly one with illiquid assets, a participant wants his order to be shown to potentially interested participants such that a trade can take place. However, the participant wants this order treated with discretion, so that his trading information does not get into the hands of non-interested parties who may take advantage of the information, thus causing adverse price movement. The mechanism and business method disclosed herein allow the user to enter a buy or sell order along with parameters, including a visibility group, which guide a computer program to distribute information about this order to desired parties. The mechanism can be used for the trading of any financial asset, including but not limited to, bonds, stocks, foreign exchange, commodities, futures, and options.

## Description

### TECHNICAL FIELD OF THE INVENTION

The present invention pertains in general to the trading of securities and in particular to the distribution and displaying of orders and interests to trade in a market.

### BACKGROUND OF THE INVENTION

Traditionally equity and futures markets have traded via a transparent market mechanism wherein all buy and sell orders are available to all participants. This is also the case for the electronic communication networks (ECNs), which have recently gained popularity and provide an electronic marketplace for individuals and/or institutions to trade NASDAQ stocks directly with one another without a specialist or market maker standing in the middle. ECNs are anonymous cross-matching systems. Examples of such systems include Instinet, Island, and Archipelago. Some examples of these systems are shown in USPN 3,573,747, which discloses an anonymous trading system for selling fungible properties between subscribers to the system; USPN 4,412,287, which discloses an automated stock exchange in which a computer matches buy and sell orders for a variety of stocks and USPN 5,101,353, which discloses an automated system for providing liquidity to securities markets in which orders are entered by the system and executed in real time either internally between system users or externally with stock exchanges and markets. In these marketplaces, all buy and sell orders are displayed to all other participants, with the identities of the buyer or seller kept anonymous. These mechanisms provide transparent marketplaces, and allow investors to avoid the market-maker bid-offer.

Some of these markets (such as Instinet) also allow a single buyer and seller to enter into private negotiations that are not made available to the other users. However, this buyer and seller still find one another through the transparent market system.

Another feature that some markets allow is for participants to place orders that will be made available only to a portion of users based on static criteria. Silverman, et al. (U.S. Pat. No. 5,136,501) disclose a method such that users can designate other users that do not meet their credit criteria for trading. These credit criteria are static, and do not change with the activity of a participant in a market. Instead, such criteria are based upon the participant's identity (or in this specific case, whether the participant is an approved counterparty), rather than the participant's activity. In a further example of order display based on a static criterion, Instinet offers users the ability to show their order to institutions only (and therefore, excluding dealers or market makers). This, again, is a criterion that is unchanging because it is based on the type of institution, which is essentially permanent.

One of the pitfalls of these market systems is that they make it difficult for investors to transact large blocks of stock for fear of moving the market against them (this is known as market impact). If an investor places a large order into the market, knowledge of this order can cause adverse price movements. Thus, investors are unwilling to transact these large positions and are forced to either present their position to a dealer or to split the order into very small pieces. The problem with presenting the position to a dealer is that although the dealer may be willing to take the position into his inventory, he will only do so at a large cost to the investor. The problem with splitting the order into small pieces, on the other hand, is that this requires a large amount of time for the investor, and may not allow the investor to transact the position as quickly as is required.

There are market mechanisms that have been developed over the past several years to attempt to alleviate this problem. One of these is ITG's POSIT, which was designed to allow anonymous mid-market crosses of shares with orders entered in a hidden-order entry book. This permits large buyers or sellers to enter their order, and if there is an offsetting position, then a trade takes place. If there is no offsetting position, then no trade occurs, but there is not an adverse impact on the price for the security since the order has not been shown to any market participants. The trades always occur at the then current mid-market price of the stock, based on pricing in a separate marketplace (such as a stock exchange or NASDAQ). This method is known as "parasitic pricing", since it provides no mechanism for price discovery of its own. A system featuring price discovery would necessitate a mechanism for formulating the cross-matched trade prices on its own, based on user preferences.

A more recent advance is the order matching system designed by Optimark Technologies (see U.S. Pat. No. 5,845,266). This system also has a hidden-order entry system, but the system also permits price discovery. The users enter a matrix of utility functions (from 0 to 1) representing the amount of satisfaction they would have if they were to transact at a set of price and quantity combinations. The system then does a large matrix multiplication to compute the trades that maximize the utility of all users. Thus, the order matching system could arrive at prices substantially different than those in the listed stock market. As such, Optimark's system does allow for price discovery beyond that in an ordinary anonymous market. An advantage of the Optimark system is that it allows both price discovery and the ability for users to keep their interests out of view from everyone in the marketplace. Thus, it is well suited for working sizes that are larger than those normally transacted in a given security.

There are drawbacks to the Optimark system. The first is that it requires participants to submit their orders in an unfamiliar way. It may be difficult for investors to take advantage of this system. A second problem with this system is that it requires users to set their own prices for large trades without any knowledge of what other participants are doing. This is satisfactory when there is a separate market for the security, and users therefore have some knowledge of reasonable prices for the security involved. One potential area of application of this system is to the transparent stock market when institutions (which hold large positions and thus cannot easily trade these positions in the daily market that is thinner and dominated by retail investors), want to conduct a transaction. However, the Optimark system does rely, to a certain extent, on investors having some knowledge of prices for the securities involved. This is a problem when attempting to apply the technology to a market that is illiquid without a reference for pricing. In such an environment, it is more difficult for investors to specify a matrix of utility functions of where they would like to transact since they have no transparent market to reference for price quotes. Thus, there is a need for an alternative market mechanism that does allow for negotiation.

Another recent advance in the electronic trading of fixed income securities is the Limitrader system, which attempts to address these issues. Press releases describe the system as having both a transparent market and a hidden-order entry system. In the hidden-order system, users can enter limits as to how far they would be willing to move from their initial price. Then, if two users are determined by the system to be the best buyer and seller, they then enter a one-on-one negotiation to set a final price. Thus, this system combines the facets of a hidden order book, a transparent market, and one-on-one negotiation.

A restriction of the Limitrader system is that it makes the assumption that the best buyer and seller will find one another in the hidden-order system. This is somewhat limiting since, especially with illiquid securities, it is likely that the best buyer and seller won't always have outstanding orders in the system. The Limitrader system has the constraint that initial order display is either made available to all or no other participants, and then negotiation occurs in a one-on-one format. However, it is more likely in this system that the one-on-one negotiation will be between the best buyer and seller with current orders, as opposed to the actual best buyer and seller.

Thus, there is a need for an improved market, which can allow users to minimize market impact, while also increasing market liquidity.

### SUMMARY OF THE INVENTION

A selected embodiment of the present invention is a method and apparatus for providing order displays to market participants wherein an investor has an order for a particular asset. The method includes the step of classifying each of the participants according to each of a plurality of criteria. The criteria are used for defining a plurality of visibility groups of the participants. In particular, the present invention allows for the user to specify dynamic criteria for the formation of visibility groups. These dynamic criteria are based upon the behavior and actions of users, which can include any current or past orders, trades or information requested about that security by that user or other users. These dynamic criteria for a given security can also be affected by user's behavior in other similar securities. Thus, the participants in a visibility group that is based upon dynamic criteria can change based upon the activity of users. Each visibility group is based on at least one of the criteria. The investor selects one of the visibility groups prior to or for submission with the order for specifying the participants who will receive the order. Finally, the order is made available to each of the participants in the selected visibility group.

In a further aspect of the present invention, trades are fulfilled between the participants who have submitted orders into the system. The matching of orders can be dependent upon the visibility group selected by the participants.

In a still further aspect of the present invention, information about fulfilled trades is selectively displayed to participants depending on trade visibility groups that were selected by the counterparties in a trade.

### BRIEF DESCRIPTION OF THE DRAWINGS

For a more complete understanding of the present invention and the advantages thereof, reference is now made to the following description taken in conjunction with the accompanying drawings in which,
Figure. 1 is a block diagram for a system for implementing the present invention,
Figure 2 is a block diagram illustrating additional aspects of the system shown in Figure 1,
Figure 3 illustrates the selectable display of orders (bids and offers) to participants in a market,
Figure 4 is a flow diagram illustrating the logic involved in a selected technique for processing of a new order, in which visible counterparties are given preference to invisible counterparties when the system is determining which orders will become matched trades.
Figure 5 is a flow diagram illustrating the processing of an order in which a match is made with the best possible price irrespective of whether it is with a visible or invisible counterparty,
Figures 6A and 6B are flow diagrams illustrating the processing of an order in which a match is made with a visible counterparty, but an invisible counterparty has a better price, wherein the participant who placed the order is given price improvement and the first opportunity to trade at this price is given to the visible counterparty,
Figure 7 is a flow diagram illustrating the generation of visibility groups,
Figure 8 is a further illustration of order visibility to participants in a market,
Figure 9 is a further illustration of order visibility to participants in a market,
Figures 10 further illustrates an example of order visibility to participants in a market,
Figure 11 illustrates order visibility in a further example for participants in a market,
Figures 12A and 12B are a flow diagram illustrating a further technique for making orders available to selected participants,
Figures 13A, 13B and 13C are a flow diagram illustrating the formation of groups by use of displayed orders and/or displayed trades,
Figure 14 is a block diagram illustrating a second system configuration for implementing the present invention, and
Figure 15 is an illustration of trade visibility in accordance with the present invention.

### DETAILED DESCRIPTION

The market mechanism described herein allows investors a new and different method with which to experiment with price discovery as compared to existing market systems. A substantial problem in most current markets is that of "market impact", which is the effect on the market when one investor places an order. If one order in a market causes a significant price change for a particular security, this price change is undesirable for the market, and in particular for the investor who placed the order. In an ideal market, the impact of any one order would be insignificant. In existing transparent marketplaces, however, market impact can be produced when many market participants see a given order.

The current available mechanisms allow display of orders to all users (which has the maximum impact on prices), or display to no users (which has no impact, but also leaves potential trading partners unaware of an interest to trade, and therefore does not provoke a response). Investors can't currently discover the impact resulting from showings their interest only to selected participants that are likely to have an offsetting interest. This is likely to be a substantially different result than that of showing it to all participants, and therefore, investors can benefit from having a mechanism that allows them to experiment with different degrees of order display. A large part of market impact from an order is that other participants with the same interest see the order and then adjust their prices accordingly. Thus, if investors are given the ability to screen out these parties, they will likely submit and display larger orders to market participants due to the lower market impact. This will, in turn, increase liquidity and make for a better market place.

The present invention allows a buyer or seller of an asset to choose what portion of the audience in an electronic marketplace will see the order. As used herein, an asset is defined to be any financial asset (stock, bond, futures contract, forward, option, any other security, currency, commodity or other financial asset), tangible asset (such as a precious metal, art, or property), any non-financial commodity (such as voice or data communication, which is typically by bandwidth) or intellectual asset (such as information or services), or electric power. The examples in this document will generally refer to the trading of securities. As used herein, an order is defined to be any indication of interest or a firm commitment to buy or sell an asset. The invention allows the investor a great deal of flexibility in how aggressively his order is marketed to other participants. For instance, if there is a seller of a security, this seller can choose among numerous options as to which other participants will see this interest (the order).

The present invention allows the investor to specify many levels of aggressiveness. In certain existing markets a participant can choose to show his order to everyone (maximally aggressive) or, in other markets, to show this order to no one (maximally passive). These markets do not take advantage of past trade data, which can be used to empower investors to have many choices for display of their order. For example, the present invention allows a seller to choose from among various audiences to display his order. Examples include, but are not limited to, (1) only showing his order to likely buyers, or (2) showing his order to everyone in the system with the exception of other sellers. These are examples of dynamic criteria that result in visibility groups that change based upon the actions taken by various users in that and related securities.

The present invention allows investors to experiment with various audiences and discover what results in the best and easiest transactions with minimal market impact cost. The present invention applies to a network of computers where participants have the ability to customize which other computers in the network have access to the participant's buying or selling interest (order).

In the present invention, each time an investor enters an order to buy or sell a given quantity at a certain price, a display variable for selecting a visibility group is entered. This display variable influences or controls which other users see this interest (order). Thus, only the designated participants will know of the existence of the order.

Therefore, the method and system of this invention allow the user to have control of the marketing of his position. This is different from marketing in the traditional arena of consumer marketing. Marketing is different in conjunction with the trading of assets because it is not in the interest of the user to show his order to certain other investors. An example of this is as follows: if investor A is a seller of a security, does A have anything to gain by showing his order to investor B, who is also a seller? The answer is probably no, since it is known that a trade will not occur as a result of A showing his order to B. The only possible result is that B will change the price at which it sells so that B will become a more aggressive seller and adversely impact A. Because A is aware of this, A will tend not to show its selling order to the marketplace. This hinders the liquidity of the entire market. Thus, if A is able to control the display of his selling order, A and other participants, will be more inclined to display their actual interest, which will be to the benefit of the entire market.

In the present invention, the entered order may still result in a trade with non-designated participants, subject to various restrictions, such as a minimum size requirement. The user sets this minimum size at the time of the order through an additional parameter. This parameter sets a minimum trade amount that is required for a non-designated viewer to be matched against the order. This feature is needed to protect the investor from non-designated users "fishing" for invisible orders by trading very small size orders. For example, a seller might designate that he would like to sell $5 million face value worth of bonds at a price of 100, to display the offer (order) only to likely buyers, and that the seller needs a minimum of $1 million for the transaction in order to trade with a user not designated as a likely buyer. Thus, another seller could not enter a bid for a very small amount of bonds (say $10,000) and find that there is a seller at 100.) (As used herein, the minimum size requirement for an order is defined to be the minimum size trade that the participant entering the order requires for his order to be matched with orders from other users that are not in the participant's visibility group. It should be noted that this minimum size requirement has no effect on the matching process if the order is visible to the participant who submitted the opposing trade being considered for a match.

In the event that two orders overlap (the bid is higher than the offer) due to one (or both) participants' lack of visibility, then the system may resolve the situation in numerous ways, including offering a price improvement to both of the investors involved.

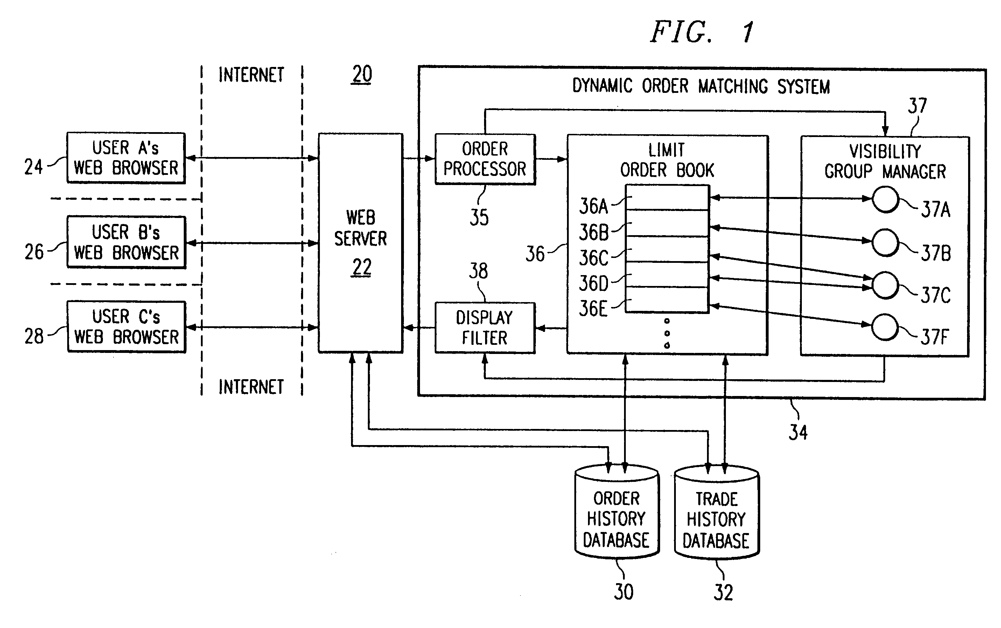

A network for one system to implement the present invention is illustrated in Figure 1. A system 20 has a web server 22, which works through the Internet for connection with user browsers such as 24, 26 and 28. The present invention utilizes several data files including an order history database 30 and a trade history database 32 which are connected to the web server 22. A dynamic order matching system 34 is included in the system 20 for dynamically matching orders that are entered into the system 20, and for controlling display of these orders on web browsers 24, 26, and 28. The system 20 enables users to place orders (buy or sell) through their web browsers and specify a visibility group of other system users (market participants) who will have access to the order. Further databases, order matching and definitions of visibility groups are described below in detail.

The dynamic order matching system 34 includes an order processor 35 that is connected to the web server 22. The processor 35 is further connected to a limit order book 36 and a visibility group manager 37. A display filter 38 is connected to the limit order book 36, the visibility manager 37 and to the web server 22. The function of the display filter 38 is to insure that a given order is made available only to the participants in a selected visibility group. Therefore, it is responsible for constructing the complete list of visible orders for each user

The limit order book 36 includes specific orders 36A, 36B, 36C, 36D and 36E. Visibility groups, which are designated sets of participants, are included in the visibility group manager 37 as 37A, 37B, 37C and 37F. Order 36A is associated with visibility group 37A, order 36B is associated with visibility group 37B and both of the orders 36C and 36D are associated with the visibility group 37C. Order 36E is associated with visibility group 37F.

The order database 30 and trade history database 32 are further coupled to the limit order book 36.

The dynamic order matching system 34 and its included components, together with the databases 30 and 32, can be implemented in either a single processing system or a distributed system of processors.

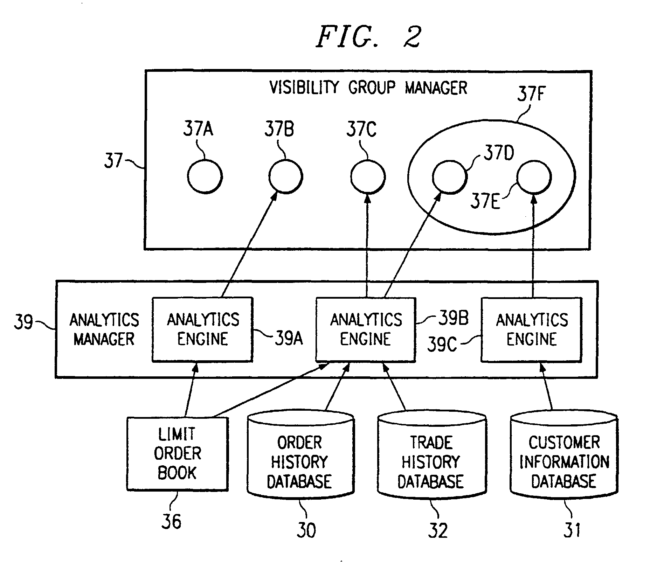

The system 20 is further described in reference to Figure 2. The visibility group manager 37 includes the visibility groups 37A, 37B, 37C, 37D, 37E and 37F. Visibility group 37F is the composite of visibility groups 37D and 37E. Figure 2 shows apparatus for the generation and updating of the visibility groups.

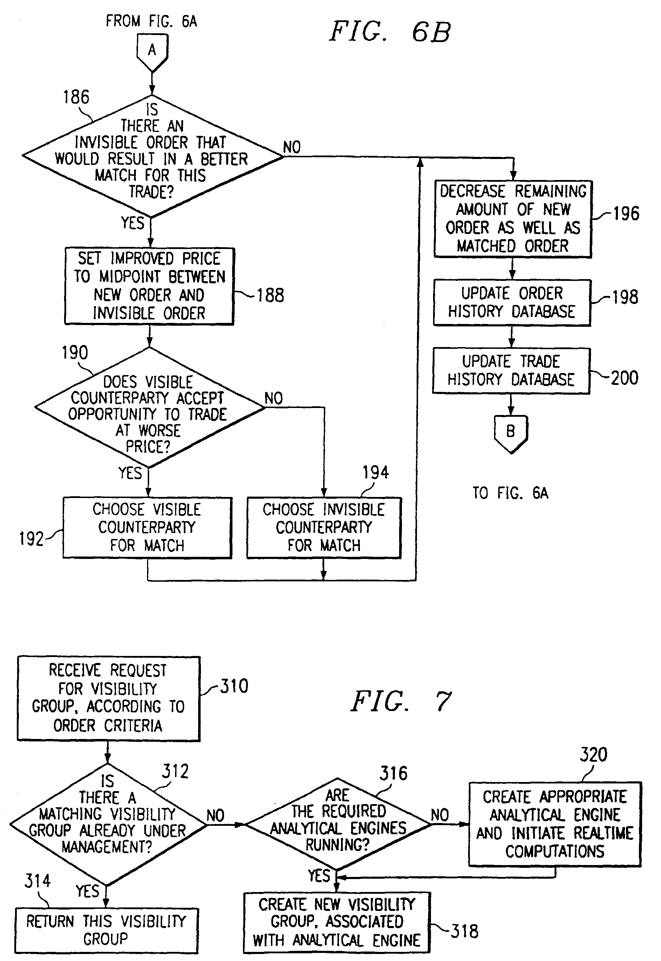

The production of the specific visibility groups is described in reference to Figures 2 and 7. Referring to Figure 2, visibility group manager 37 and an analytics manager 39. The group manager 37 includes independent visibility groups 37A, 37B and 37C. Group 37F is dependent upon two individual groups 37D and 37E.

Group 37A represents a static group that is never updated or changed. Therefore, it does not need an analytics engine for maintenance. An example of group 37A is a single specific buyer who recently purchased a market security in a specific trade, at a price such as 102.5. Such a group is maintained until specifically cancelled.

The group 37B is a list of current sellers and this group is updated continuously by an analytics engine 39A. The analytics engine 39A continuously monitors the updates to the limit order book 36 thereby generating a continuously updated list of current sellers, which is stored for the group 37B.

Group 37C represents a defined group comprising the three most likely buyers for a given security. This is calculated by the analytics engine 39B. The determination of these likely buyers can be based on many factors including current orders, past trade history and past order history. In addition, this determination may be based on the same information for similar securities. All of the buyers must be continuously ranked in order to determine the three most likely. The analytics engine 39B receives input from the limit order book 36, order history database 30 and trade history database 32. The analytics engine 39B also generates an identification of the participants in a visibility group 37D comprising the top ten likely buyers.

An analytics engine 39C utilizes data from a customer information database 31 for identifying the participants in a visibility group 37E, which in this case, is defined to be all participants who are not classified as hedge funds. Group 37F is defined to be the visibility group comprising those participants who are members of both group 37D and group 37E ― in other words, the set of participants who are among the top ten likely buyers, but are not hedge funds.

As shown, the independent visibility groups can be combined in any pattern to produce additional visibility groups that can be selected by a user when an order is submitted. A user may further select any number of visibility groups to provide a broader distribution for his order.

The present invention defines a plurality of visibility groups based on specific criteria that are applied to each of the participants. Visibility groups can be defined in many ways. These criteria can be dynamic or static. As used herein, static criteria are defined to be those criteria that define a set of participants, wherein the set is based on the identity of the participants. This could include, for example, whether a participant is a mutual fund, or whether the participant was involved in a specific order or trade. As used herein, dynamic criteria are defined to be those criteria that define a set of participants, wherein the set is subject to change as a result of factors including the behavior and actions of participants. These behavior and actions can include any current or past orders, trades, or information requested for that security or similar securities by that participant or other participants.
1) All buyers (sellers) with orders currently in the system. This is an example of a dynamic criterion.
2) Any likely buyers (sellers), which is an example of a dynamic criterion. These likely buyers (sellers) may not be currently represented in the market, but given recent trade history, they are deemed to be likely participants in a new transaction. An investor (system user) can also view how many users this group includes, and if this number is thought to be too large, then the investor can specify how many likely buyers should be able to view his order. For example, if the system indicated that there are 12 likely buyers, then the user could request that his order only be shown to the 5 most aggressive of these likely buyers.
   The ranking of likely buyers (or sellers) can be done by a number of means. These include:
   (a) Keeping a record of past trades and using a model or other means to determine if these past participants are likely participants now. For example, if participant A bought Ford Motor 8% bond of Nov 2005 at a spread of 55 basis points over the equivalent Treasury Bond two weeks ago, A is more likely to be a buyer of these bonds today if the spread of the offer price is at 60 over Treasuries than 50 over Treasuries (since 60 is a more attractive yield than the previous purchase).
   (b) Link similar securities such that a buyer of one type of security is likely to be a buyer of similar securities. In the example above, if instead of having a new offer in the Ford Motor 8% of Nov 2005, there is an offer in the Ford Motor 7.5% of Jun 2005 at the same spread of 55 basis points over Treasuries. Despite the fact that participant A has not yet purchased this bond he could be deemed to be a likely buyer since the two securities are so similar.

   These are examples of various ways in which the system of the present invention determines who are "likely buyers." It is then up to the user whether he will show his order to this entire group. The system specifies how many participants are in each of the defined groups.
3) The most recent buyer (seller) in a given security. This is an example of a dynamic criterion. As new trades occur the most recent buyer (seller) changes. A further extension of this dynamic criterion would be to include any buyer or seller of a given security within a defined time period (i.e. the past month) or any buyer or seller within a time period at a certain minimum price level.
4) The buyer (seller) in any specific past trade. This is an example of a static criterion. Illiquid securities sometimes only trade once a week or less. So, it is unlikely that participants will have their potential interest represented in the system at all times. Therefore, a potential seller (buyer) may want to look at past trades and contact specific participant(s) from these past trade(s). Each participant in a past trade can be identified by a user and assigned a nickname such that the user can identify them. An example would be if the user defined them as "buyer from August 10^{th"} so that they could then designate to show future orders to that person The user would not know the real identity of the participant to whom he is showing the order. In addition, a group of several participants in past trades can be formed in a similar manner.
5) All participants with the exception of current or likely sellers (buyers), which is a dynamic criterion. This allows an investor (participant) to reach a wide audience, but to avoid showing its order to other investors with the same interest. This is potentially useful, since indicating one's sell order to other likely sellers may cause these other sellers to become more aggressive in their own order, resulting in adverse market impact.
6) The size of the other investor, which is a dynamic criterion. Active participants in a given security can be classified by the amount of volume that they are trading in a given or similar security. This allows investors to screen to whom they show a given order that is large in the context of the current market. For example, if an investor wants to sell $20 million of a given bond and would like to make the trade in as few pieces as possible, this investor would probably not want to show this order to an investor that tends to trade no more than $1 million. This variable gives the investor this flexibility.
7) Investor type, which is a static criterion. In each market, there are different types of investors that trade. Examples include mutual funds, pension funds, hedge funds, and banks. Investors may have a preference as to which audience has access to a given order, so an investor can specify the participants that meet any one particular criterion.
8) Investor behavior, which is a dynamic criterion. These criteria will take the form of a rating as to the reliability of a particular participant. For instance, an investor might not want to show a large order to a participant that has a history of not trading or canceling their order when shown large orders. These criteria give users that flexibility.
9) Any combination of above. For example, only display to likely buyers that also trade large size. A second example is displaying only to mutual funds, excluding a selection of particular participants identified by particular past trades visible in a history, which is a combination of static criteria.
10) Any other characteristic which an investor deems useful in the description of the audience that he would like to target for his order.

An important aspect of the present invention is the selective display of bids and offers to participants (users) in a market system implemented as shown in Figures 1 and 2.

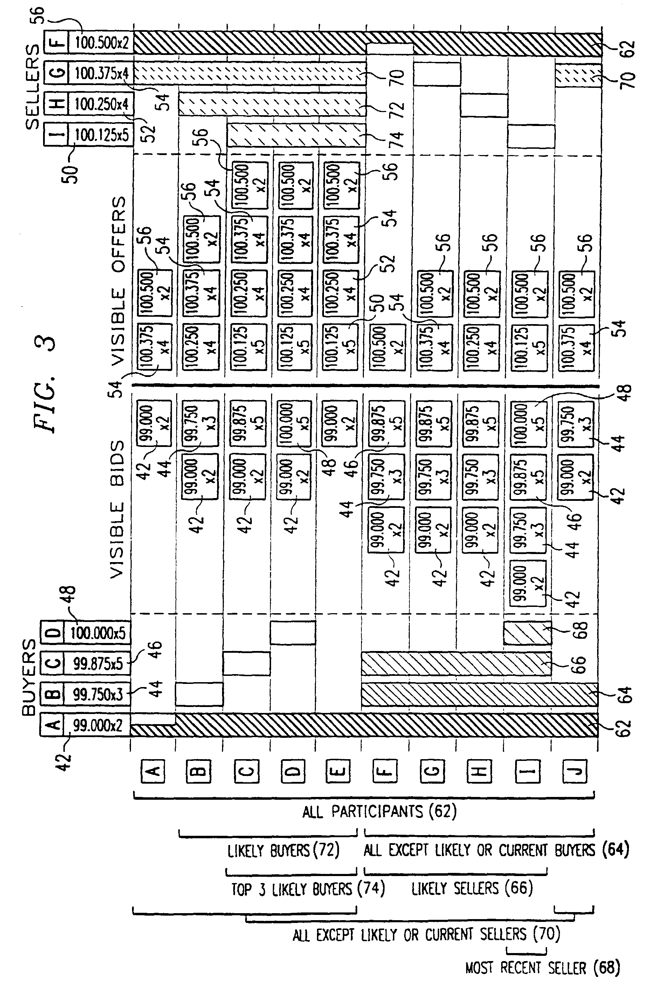

The market shown in Figure 3 is for one particular security, such as one specific bond issued by a corporation. In the example shown in Figure 3, the market for the Ford 7.5% of 2008 bond will be used. This is merely an example, and the invention is by no means limited only to the trading of bonds. The potential areas of application for this invention include the trading of all assets. In this example, there are 10 participants that are currently viewing or entering orders in the market for this bond. In order to keep this example simple, it is assumed that no investor enters a display visibility group (criteria) that involves a participant or firm type criteria (static criteria), although orders of this type are possible. Instead, the example in Figure 3 focuses on dynamic criteria and the impact of new trades and orders on these criteria.

For this example, the 10 participants in the market for the Ford Motor 7.5% bond of 2008 are the participants A through J. In the described example, there has been no trade on the current day for the Ford bond, but for our example, yesterday E purchased $5 million in bonds from I at 100. So, despite the fact that participant E has no indication in the current market for the bond, the system still deems this participant E to be a likely buyer.

It should be noted that each participant is classified as a likely buyer, a likely seller, or neither for each security. Users can enter both buy and sell orders. However, a given user will generally not be classified as a likely buyer and a likely seller simultaneously. Depending on the side on which they are more aggressive, they will be classified as either a likely buyer or a likely seller. In addition, a user is not usually classified as a likely buyer or likely seller unless the user either recently traded the security (or a similar security), or is currently working an aggressive order in the security (this depends on the specific security). These rules are in place to prevent users from trying to abuse the system in order to extract information that other users do not want them to have. An example is a likely seller of a security who was intending to work his order via another market system but wanted to discover the activity of other sellers within this system. This user could pretend to be a buyer in order to find out what other sellers existed. This user could then quickly cancel his buying order after he had uncovered the desired information. Thus, the system requires that the buyer leave an order that has a reasonable chance of being filled for some period of time before the buyer gains access to the selling list. In addition, the system polices abusers of the system. Thus, if a particular user has a tendency to submit orders for a short period of time and then cancel them, this user will be given a warning and may not gain access to the other side of the market when he initially submits an order.

In addition, as mentioned above, when a user sets an order, the user has an option of declaring a minimum size requirement, below which he will not trade with a user that is not designated to see his order. This is a second safeguard to prevent sellers (buyers) from entering a very small buy (sell) in the bond in order to find out if there is another seller (buyer) at a lower price that they cannot see. In this example, all users chose $1 million as the minimum size that they would not trade with a user not designated to see their order, unless that user's order was for at least $1 million worth of the security.

The participants in the market shown in Figure 3 are designated as A, B, C, D, E, F, G, H, I and J. The participants A, B, C and D are buyers and the participants I, H, G and F are sellers at a particular time. Participants E and J are neither buyers nor sellers at this time.

The participants in Figure 3 are classified according to predetermined criteria such as described above. These criteria include:
All participants (A, B, C, D, E, F, G, H, I and J). [62]
   1. All except likely or current buyers (F, G, H, I, J). [64]
   2. Likely sellers (F, G, H, I). [66]
   3. Most recent seller (I). [68]
   4. All except likely or current sellers (A, B, C, D, E, J). [70]
   5. Likely buyers (B, C, D, E). [72]
   6. Top three likely buyers (C, D, E). [74]

Each participant is examined for each criterion and a notation is made as to whether or not the particular criterion is applicable to a particular participant. A participant can meet more than one criterion. The participants who qualify for each criterion are listed above.

All of the participants that have a common criterion are designated as a visibility group. For example, the participants F, G, H, I and J comprise the visibility group 64 for the criteria "All except likely or current buyers." A visibility group such as 68 may have only one participant such as I for "Most recent seller." A further example of a visibility group is the set of participants B, C, D and E for "Likely buyers", which is group 72.

When a user of the present system submits an order (buy or sell), that user also selects one or more visibility groups for designating the participants in the market who will receive and view the order. The visibility group can be selected when the order is entered or may be selected in advance for a particular user and security. Thus, only the participants in a visibility group will see an order having that visibility group selected. Users are provided access by either allowing them to request information that has been posted, such as at a web site, or the information can be transmitted directly to the user's computer through a communication system such as the Internet or a data communication link.

Referring to Figure 3, there are shown column headings "Visible Bids" and "Visible Offers." The bids and offers in these columns are visible to the participant identified horizontally to the left.

In Figure 3 buyer A has a bid 42, buyer B has a bid 44, buyer C has a bid 46 and buyer D has a bid 48. On the seller's side, seller I has an offer 50, seller H has an offer 52, seller G has an offer 54 and seller F has an offer 56.

Each bid and offer has two elements. The first is the dollar amount per unit, which is 99 for bid 42 and the second element is the size of the bid, $2,000,000 in this example for bid 42. Bid 44 is for 99.75 (dollars) per unit and a size of $3,000,000 for the security. Likewise, the offer 50 is an offer to sell at 100.125 (dollars) for a total $5,000,000 transaction.

Further referring to Figure 3, the buyer A has selected the visibility group 62, which is "All participants." Thus, the bid 42 is provided to each of the participants in this market as shown under the column Visible Bids. Also, each order is provided for display to the participant who submitted the order.

The buyer B has order 44 and this buyer has selected the visibility group 64, which is defined as "All except likely or current buyers." This consists of participants F, G, H, I and J. Thus, these participants also have access to view the bid 44. Buyer C has bid 46 and has selected the visibility group 66 for "Likely Sellers." The members of this visibility group are F, G, H and I. Thus, each of these participants receives the bid 46.

The buyer D has bid 48 and has selected the visibility group 68 for "Most Recent Seller." Thus, only the participant I, other than D himself receives the bid 48.

A buyer can likewise select more than one visibility group and access to his bid is then made available to each of the participants in all of the selected visibility groups.

The distribution of offers by the sellers is conducted in the same manner. Seller I has offer 50 and has selected visibility group 74, thereby making his offer 50 available to the participants C, D and E. Participants C, D and E are considered to be the "Top 3 likely buyers" based on their current bids and recent trade history. Seller H with offer 52 has selected the visibility group 72 for "Likely buyers" such that his offer is provided to the participants B, C, D and E. It should be noted that despite having a bid at 99, participant A is not classified by the system as a "Likely buyer." The reason is that a price of 99 is not competitive relative to the current market in this security.

Investor E, who yesterday in this example purchased $5 million at 100, does not currently have an order in the system, but the system still treats this participant as a potential buyer. In fact, this participant is deemed to be second most aggressive of the likely buyers currently. The method used to decide where to rank likely buyers depends on the individual security. In this case since E paid 100 yesterday, he is considered to be less aggressive than the current 100 buyer, but ahead of the 99.875 buyer. In this example, it is assumed that all external parameters in outside markets are unchanged from the last trade.

Seller G, with offer 54, has selected the visibility group 70 so that his offer is provided to participants A, B, C, D , E and J. The seller F, having offer 56, has selected the visibility group 62 for "All participants" thereby submitting his offer to all participants in the market shown in Figure 3.

Finally, investor J has expressed no interest in this security and is therefore regarded as neutral. Thus, investors A-E are deemed to be buyers, F-J are sellers, and J is neutral.

A significant aspect of the present invention is that each participant can see a different market for the same security. For example, the market that participant A sees is shown in Figure 3 in the first row under the column headings Visible Bids and Visible Offers. The market that participant A sees includes the best bid of $2 million at 99 and best offer of $4 million at 100.375. At the same time, a more aggressive buyer, such as participant D, sees an entirely different market because D is a "Likely Buyer" in Figure 3. Participant D sees a market of best bid of $5 million at 100 and a best offer of $5 million at 100.125. Thus, because of participant D's aggressive bid, D sees more offers than A. This aspect of the present invention allows each participant to potentially see a different market in the same security. In contrast, previous market mechanisms result in all investors seeing the same market for a given security. Thus, the present invention allows investors to decide to whom to show their orders. If all investors were to choose to show their order either to all other investors or to no investors, then all participants would see the same market. Thus, the present system results in unique markets for each participant when other participants choose to select visibility groups.

In both of the columns, Visible Bids and Visible Offers, the orders are organized left to right from lowest to highest. All of the visible bids and visible offers correspond to the illustrated buyers' bids and sellers' offers.

Each user (investor) order contains certain information for the security to be traded. This includes (1) the identity of the security, (2) the per unit price of the security, (3) the total amount of the security to be traded, (4) the selected visibility group and optionally (5) the minimum trade size requirement. As noted above, the visibility group can be selected for an order at the same time the order is submitted to the system or it may be designated with the system in advance of the order.

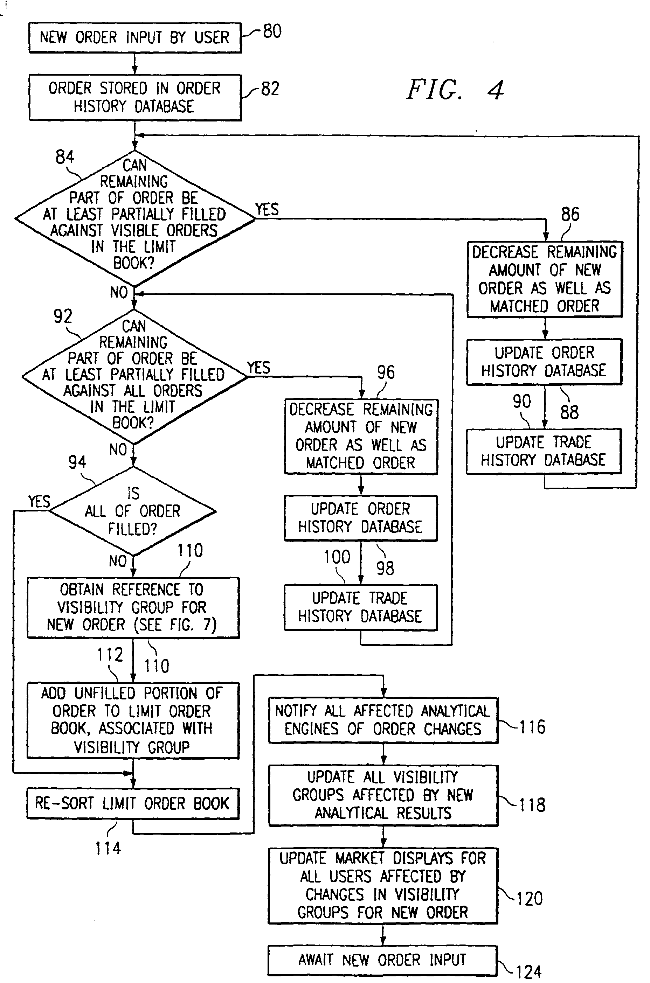

Referring to Figure 1, upon entry of an order, the user's web browser immediately transmits this order to the order information history database (for accurate record-keeping) as well as to the dynamic order matching system. The steps involved in the processing of a new order are described in reference to Figures 4, 5, 6A and 6B.

All of the orders submitted into the system of the present invention are maintained in a limit order book 36. The information for each order is maintained in this book for each security. Whenever a buyer's price meets a seller's price (subject to the minimum size requirement mentioned above), a trade is completed. After this, the relevant databases are updated and the filled portions of orders are removed from the order matching system and users are notified via their web browsers. Whenever the size of matching orders does not coincide, the lesser amount is traded, which is termed the filled portion of the order, and the remainder is maintained as a current order.

The order book 36 is maintained for each security listing each of the bids and offers including the participant making the order. The order book for the security shown in Figure 3 is shown below in Table 1

**Table 1**

| | BIDS | | OFFERS |
|---|---|---|---|
| D | 100 x 5 | I | 100.125 x 5 |
| C | 99.875 x 5 | H | 100.125 x 4 |
| B | 99.75 x 3 | G | 100.375 x 4 |
| A | 99 x 2 | F | 100.5 x 2 |

The buy (bid) column is listed in descending order and the sell (order) column is listed in ascending order from top to bottom so that the most favorable prices are at the top. When there is a change in a bid or offer, the listing is resorted to place them in this sequential order.

An order is deemed to be "visible" for those participants who have received the order or have access to it, and is deemed to be "invisible" for all other participants. In certain cases, order matching is performed differently for visible and invisible orders. For example, one method can involve only matching orders that are mutually visible. Subsequent examples in this description refer to various methods in which visible and invisible orders can be matched with each other.

The method of the present invention results in different users seeing different markets for a given security. Therefore, users can also see different prices for their best bid and offer should they choose to either sell at the bid side or buy on the offer side. For instance, if other users choose to limit the display of their order, then a likely buyer will see a different market in a given security than a likely seller would. In addition, as an investor makes the system aware of his order, then the market that this investor sees in a given security may change. For instance, if an interested purchaser of a security has not yet entered any order in the system for this security (recently, i.e. in the past few days) then he will not see the offers from users that have requested that their order only be shown to likely buyers. Hence, as soon as the buyer inserts his order, he may see some offers that he had not previously seen. Therefore, the system is dynamic and encourages participants to make their orders available to the system such that they can see all of the offsetting orders. Thus, it is in the interest of users to insert liquidity into the system before taking liquidity out of the system. The system of the present invention creates a dynamic visibility market.

In the "actual market" (that is, the entire limit order book without regard to visibility), trades occur when bid and offer prices overlap, so long as minimum size requirements are met. Price improvement may also occur. Each user (for example, user X) sees a different, individual market of visible orders (the "User X market"). The best bid-offer spread in the User X market will be at least as wide as the spread in the actual market, and in most cases, wider.

A question which arises is what should happen if user A enters an order that results in a match in user A's market, but also results in a better match (one with more overlap and room for price improvement) in the actual market. If, for example, user A were a buyer, this would occur if the most aggressive seller in the system had not designated user A to see his offer. There are several methods that can be used to resolve this problem. However, the present invention is not limited to any one of these methods.

One method for resolving this problem is presented as follows. When user A enters a new order, first the system checks to determine if there is a match in user A's market. If there is a match, then this trade is completed (with price improvement when applicable). If there is no match in user A's market, then the actual market is checked for a match. Any match in the actual market must be for a trade size that is greater than or equal to the minimum size requirement set by the participant (counterparty) with which user A is matching. Again if a match exists then a trade occurs. The implication of this method is that if user A responds to an order in user A's market that results in a trade, then user A does not access the rest of the market for price improvement. This may appear to be non-optimal but there is a reason to have the system work in this way. For example, if user B is the best offer in user A's market at 100, and user C is the best offer in the actual market at 99.75, user C has chosen not to display this offer to user A. Thus, if user A responds to the offer that he sees at 100, then user C should not get access to this trade, because he made a choice not to display his 99.75 offer. User B was providing liquidity by displaying his offer, and therefore, since there is another user willing to trade at this price, user B should be given the trade execution at 100. This process is described in detail in Figure 4.

An order may be placed with a selected visibility group, and there may be a counterparty with a matching order that is not a member of that visibility group. As shown in Figure 4, visible orders are filled before invisible orders at the same price. Further, if two counterparties have identical orders at the same price and at the same level of visibility, the order entered earlier is filled first (i.e., similar orders are processed on a first-come, first-serve basis).

Referring to Figure 4, at step 80, a new order is input by a user who is a participant in the market for a selected security. At step 82 the order is stored in the order history database. Following step 82 is a question step 84 which determines if the remainder of the current order, which in the first instance will be the entirety of the current order, can at least partially be fulfilled against visible orders in the limit book. The limit book, as noted above, is a file of all orders for a particular security, including both visible and invisible orders. Visible orders are those orders which are displayed or available to certain participants as a result of a participant designating a selected visibility group for an order.

If the response to question step 84 is yes, entry is made to step 86 in which the amount of the order is decreased by the amount of the match and the matched order is likewise decreased. At step 88, the order history database is updated to reflect this transaction. Similarly, at step 90, the trade history database is updated to reflect the transaction.

Upon completion of step 90, entry is again made to question step 84. If the answer at question step 84 is no, entry is made to question step 92. In step 92, an examination is made against all orders in the limit book to determine if at least a part of this order can be filled. Since step 92 is matching against all orders, an order can only be filled if the minimum size requirements of the two orders are met. If the answer at step 92 is yes, entry is made to step 96 wherein the amount of the current order is reduced against the matched order. Next, the order history database is updated in step 98 and the trade history database is updated in step 100 followed by a return to the question step 92.

If the answer to question step 92 is no, entry is made to question step 95 to determine if all of the order has been filled. If yes, entry is made to a step 114, which is described below.

If the answer at question step 94 is no, entry is made to step 110 in which the visibility group designated by the user along with the new order entry in step 80 is referenced to identify the participants designated to receive the order. This is further described in reference to Figure 7. In step 112, the unfilled portion of the order is added to the limit order book and is associated with the identified participant and the selected visibility group. Following step 112, entry is made to step 114 in which the limit order book is resorted to organize the data stored therein In step 116, the appropriate analytical engines affected by any change in the limit order book receive the resorted order book. In step 118 all the visibility groups are updated according to the operations performed by the analytical engine for the visibility groups. In step 120, the market displays are updated for all users, such as shown in Figure 3 for all changes in the visibility groups for the new order. Finally, entry is made to step 124 for awaiting a new order input, which is then processed in step 80.

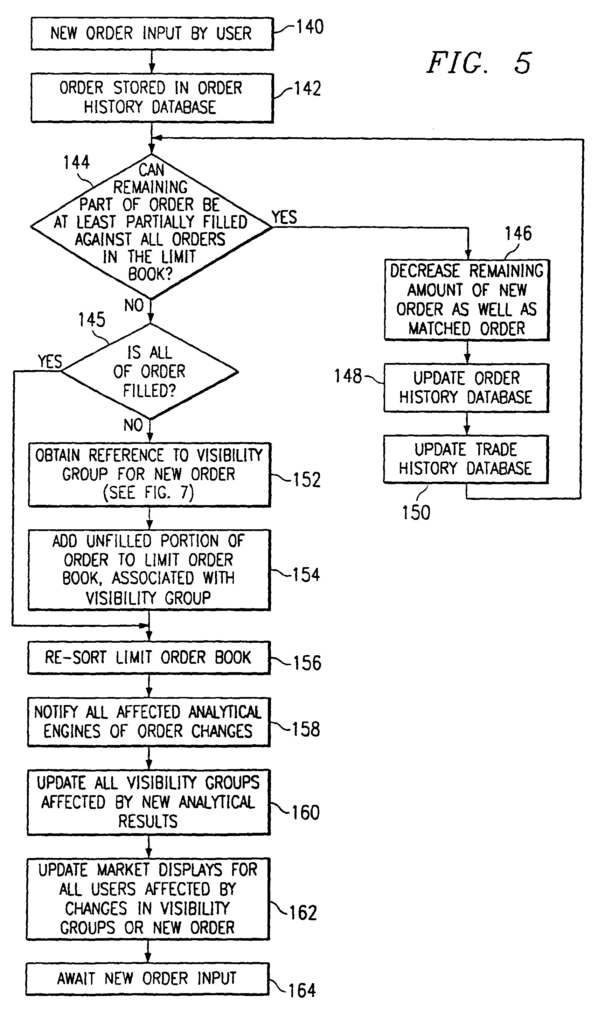

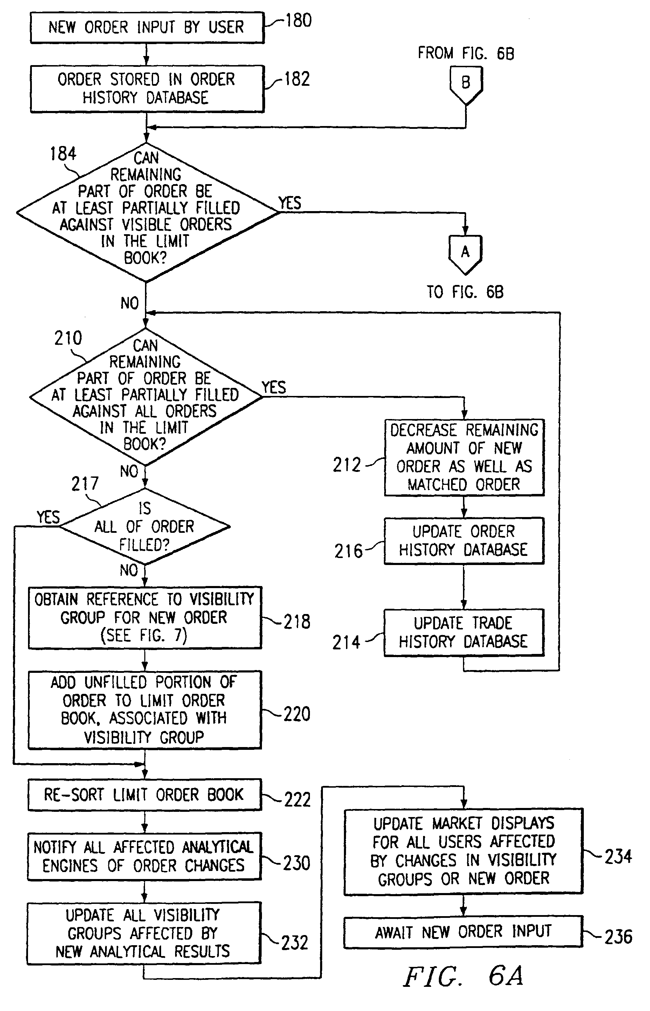

A second method for resolving the subject problem results in the trade going directly to the investor with the best price and the overlap is split. This is shown in reference to Figure 5. In this method there is no need to first check if there is a match in user A's market. Instead, with each new order the actual market (visible and invisible orders) is checked for new matches. So, in the example above, if user A enters a 100 bid and user C has a 99.75 offer, these investors trade at 99.875, thereby splitting the price difference. The problem with this method is that it doesn't reward user B for making the visible 100 offer that user A decided to take (by submitting a 100 bid). Thus, there is little incentive for investors to display their orders. This approach is less preferred to that shown in Figures 4 and 6.

Figure 5 therefore depicts an alternative process to that shown in Figure 4. In Figure 5 the visible and invisible orders are treated equally. Referring to Figure 5, a new order is input by the user in step 140. This order is stored in the order history database at step 142. In a question step 144, an examination is made to determine if the remaining part of the order, or the entirety of the initial order, can be at least partially filled against all orders in the limit order book. This includes visible and invisible orders. For any invisible orders, the minimum size requirement must be met in order for a trade to occur. If the response at question step 144 is yes, entry is made to step 146 for executing the match of the orders. The new order is decreased by the amount of the matched counterparty order. At step 148 the order history database is updated to reflect this transaction, and at step 150 the trade history database is updated to reflect the transaction, which includes any price improvement which took place. From step 150, entry is made back to question step 144.

If the response at question step 144 is no, entry is made to a question step 145 to determine if all of the order has been filled. If yes, entry is made to step 156, which is described below.

If the response is no to question step 145, entry is made to step 152 for obtaining the identification of the participants in the visibility group selected by the user along with the order input. In step 154 the current order, the entire order or remaining unfilled portion, is added to the limit order book and is associated with the selected visibility group. At step 156 the limit order book is re-sorted. Proceeding to step 158, all analytical engines involved with changes in the order book are notified of these changes. In step 160, the visibility groups are updated and the analytical results produced by the analytical engines.

In step 162 the market displays, such as shown in Figure 3, for all users are updated according to the changes in the visibility groups as calculated to update and reflect the new order. The process terminates in block 164 to await a new order input and transfer to new order input step 140.

Figures 6A and 6B illustrate a third method, in which a match is made for an order with a visible counterparty, but an invisible counterparty has a better price. In this case, the participant with the new order will get price improvement as a result of the invisible participant's order. However, the visible counterparty is given the opportunity (via interactive prompting) to move his order to the less favorable price and complete the trade. If the visible counterparty refuses to do so, then the invisible counterparty becomes the match for the new order.

This method allows for price improvement for user A because of the lower offer in the actual market, but still gives user B the first opportunity to trade since user B provided the actual liquidity by showing the order that caused A to take action. In this mechanism, first user A's market is checked, and if there is a match, then the actual market is still checked. If there is greater overlap in prices in the actual market (subject to the minimum size requirement), then this overlap is split and the trade price is set, but the trade is not yet consummated. Next, the best seller from user A's market is given the option to improve his price and trade at this new level since it was his offer display that led to the trade. In this mechanism, since the bid of A is 100 and C's offer is at 99.75 and the overlap is split, the trade takes place at 99.875. A is the buyer; the only question is who is the seller. B is given the opportunity to improve to 99.875. If B decides not to improve then C is the seller and receives an improvement to 99.875.

Referring now to Figure 6A, a new order input is submitted in step 180 by a user. At step 182, the order is stored in the order history database. Entry is then made to a question step 184 to determine if the remaining part of the order can be at least partially filled against visible orders in the limit order book. If the answer to this inquiry is yes, entry is made to step 186 (Figure 6B), which makes an examination to determine if there is a non-visible order that would result in a better match for the trade. In order for a potential match with a non-visible order to occur, the minimum size requirements of both orders must be met. If so, entry is made to step 188, which sets the improved price to the midpoint between the new order and the invisible order. From this step entry is made to step 190 to make the inquiry as to whether the visible counterpart will accept an opportunity to trade at a worse price - that is, the midpoint price determined in step 188. If the answer to this inquiry is yes, in step 192, the visible counterparty is selected as a match for the order. If the answer in question step 190 is no, entry is made to step 194 in which the invisible counterparty is selected for the match. In either case, following steps 192 or 194, entry is made to step 196 for decreasing the remaining amount of the new order and the matched order according to the transaction completed as determined in steps 192 or 194. Step 196 is also activated when the result of the inquiry at step 186 is no.

Following step 196, the order history database is updated at step 198 and the trade history database is updated at step 200 followed by re-entry to question step 184 (Figure 6A).

If the response to the inquiry at question step 184 is no, entry is made to a question step 210 which makes an examination to determine if the remaining part of the order can be at least partially filled against all orders in the limit book. This is an examination against invisible orders, since a check of visible orders was made in step 184. If the response to the question step 210 is yes, entry is made to step 212 to decrease the remaining amount of the new order as well as the matched order according to the transaction. Following step 212, the order history database is updated at step 214 and the trade history database is updated at step 216 followed by a return to step 210.

If the answer at step 210 is no, entry is made to a question step 217 to determine if all of the order has been filled. If the answer is yes, entry is made to a step 222 which is described below.

If the answer to the inquiry in question step 217 is no, entry is made to step 218 to obtain the visibility group for the new order, as submitted by the user with the new order. In step 220, the unfilled portion of the order is added to the limit order book together with the selected visibility group. The limit order book is resorted in step 222. In step 230, the limit order book data is transferred to all relevant analytical engines (see Figure 2). In step 232, the visibility groups are all updated according to the analytical processing for defining each of the visibility groups. At step 234, the displays for each user are updated according to the changes in the visibility groups for the new order.

The process is completed at step 236 to await new order input at step 180.

Figure 7 represents the process in which visibility groups and analytics are established. This is the process of operation for the system shown in Figures 1 and 2. In step 310 the order processor 35 receives a request for a visibility group, which is included in an order. In question step 312 an examination is made to determine if there is a matching visibility group already under management of the visibility group manager 37. If the answer to the inquiry in step 312 is yes, the existing visibility group is returned from the group manager 37 to the order processor 35.

If the response at question step 312 is no, question step 316 is entered to inquire if the required analytical engines in manager 39 are running for the selected visibility group. If the response to this question is yes, entry is made to step 318 to create a new visibility group that is associated with the running analytical engine. However, if the response to question step 316 is no, entry is made to step 320 to create an analytical engine for the requested visibility group and initiate real-time computations. After step 320 has been completed, entry is made into step 318 to produce the selected new visibility group, which will be maintained in the group manager 37. Each analytics engine, which may be an independent program, in manager 39 produces one or more visibility groups by selective use of data from sources including the order book 36 and databases 30, 31 and 32.

What follows are three trade examples that each represents a continuation of the market shown in Figure 3. Since all of the visibility criteria in Figure 3 are dynamic, these examples exhibit some of the changes in visibility groups that can occur with dynamic criteria as a result of new orders or trades. Once these changes occur, the orders associated with these criteria are displayed to the new visibility group.

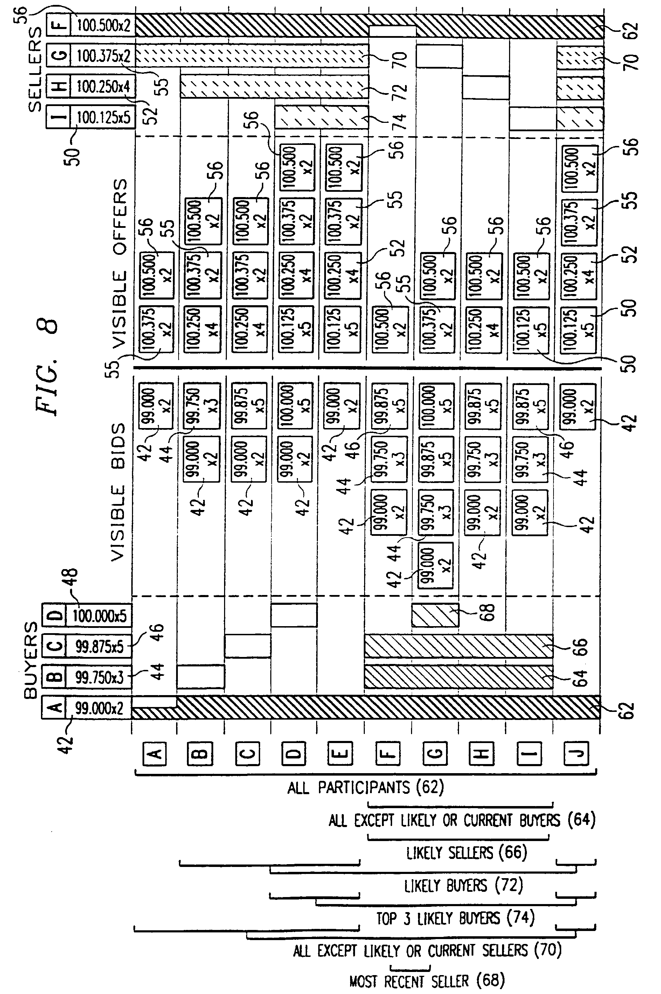

The first of these example trades is shown in Figure 8. Despite the fact that J has not entered any orders in Figure 3, J decides to lift the offer that J sees (that is, he will submit a bid at the same price and quantity, to achieve an immediate match). J buys $2 million at 100.375 from G. G's new offer 55 at 100.375 becomes $2 million, rather than the original $4 million. J leaves no new order in the market. In these examples, it will be assumed that the matching algorithm detailed in Figure 4 will be used unless otherwise noted. After this or any new order is completed all visibility groups are updated. This results in the following changes to the various visibility groups described in reference to Figure 3, which affect various participants' new markets:
1) J joins the likely buyer list.
2) J also becomes one of the top 3 likely buyers, and C is removed from this list.
3) G becomes the most recent seller, replacing I.

1) This results in the following groups after this update (Figure 8):
   1. All participants (A, B, C, D, E, F, G, H, I and J).
   2. All except likely or current buyers (F, G, H, I).
   3. Likely sellers (F, G, H, I).
   4. Most recent seller (G).
   5. All except likely or current sellers (A, B, C, D, E, J).
   6. Likely buyers (B, C, D, E, J).
   7. Top three likely buyers (D, E, J).

Figure 8 shows the new market that results after this trade is completed. As can be seen across the top, the only change to the "actual market" from Figure 3 is that G's 100.375 offer is now for $2 million rather than $4 million. However, there have been changes to visibility groups as a result of this trade. These changes do affect the visible bids and offers of several users.

J joins the top 3 buyer's list and now sees the same offers as D and E. J now has access to the 100.125 and 100.25 offers that J did not previously see and now realizes that he could have traded at a better price had he first submitted a bid. As can be seen in Figure 8 across the bottom row which represents participant J's market, the best bid (42) that J sees is 99 with 100.125 as the best offer (50). J no longer sees B's 99.75 bid (44) since J is now designated as a buyer. J has no way of knowing if B cancelled this bid or whether J has been dropped off of the visibility list for this order.

C now joins B as only a "Likely Buyer", but not a "Top 3 Likely Buyer", and therefore does not have access to I's 100.125 offer (50) any longer. C would have no way of knowing if this offer was canceled or whether he lost access to this order. User C could test whether I's offer is still in the market by placing a 100.125 bid of at least $1 million that meets the size criteria set by I. The market that C now sees is shown in Figure 8 by looking across the corresponding row. The best bid (46) that C sees is by C at 99.875 and the best offer (52) is by H at 100.25. C could become one of the top 3 buyers again by bidding 100 or higher.

The last change is that user G is now the most recent seller. Thus, participant G now sees D's 100 bid (48) while I no longer sees this bid. The new markets for participants G and I can be seen by looking at Figure 8 under Visible Bids and Offers in the rows labeled G and I. The market that user G now sees is a best bid (48) of 100 and a best offer (55) of 100.375. Meanwhile, I now sees a best bid of 99.875 and best offer of 100.125.

This example illustrates that J would have gotten a better execution by lifting the offer after submitting a bid to the system. This is because investors are likely to gain access to better markets by informing the system of whether they are a buyer or a seller of a given security by submitting an order. So, alternatively J could have submitted a 100 bid prior to lifting the 100.375 offer. If J had done this then he would have been added to two new visibility groups, "Top 3 likely buyers" and "Likely buyers", and would have thus gained access to the 100.125 offer (50) of I as well as the 100.25 offer (52) of H prior to trading. Thus, an investor is rewarded for providing liquidity to the system.

The second and third trade examples also continue from Figure 3. In each case, user H decides that he would like to be a more aggressive seller of this bond. We consider two scenarios. The first is that H moves his current sell order to the bid price in user H's market, or enters a $4 million sell order at 99.875. The second example is that H moves his 100.25 selling order to 100 and is therefore not taking liquidity out of user H's market. Thus, this results in an update to the actual market system.

In the first of these two examples since H is taking liquidity out of the system, H does not gain access to D's 100 bid since investor D has chosen to only display this bid to the most recent seller in an actual transaction, which is currently I. This can be seen in Figure 3 by looking at the row for participant H, which shows that user H's market is 99.875 bid and 100.25 offer. So, whereas D limits its own market impact by only showing this order to one participant, D can also miss a trade if another user responds by transacting at another user's bid, which is displayed to this user. Thus, H trades $4 million at 99.875 with C as the buyer. This transaction is then shortly thereafter displayed to other users. In this example it is assumed that the trade is displayed to all other participants. However, another embodiment of the present invention (described below) allows each participant to choose which other users see his trade.

The following changes happen to visibility groups as a result of this trade:
1) H becomes the most recent seller, replacing I.

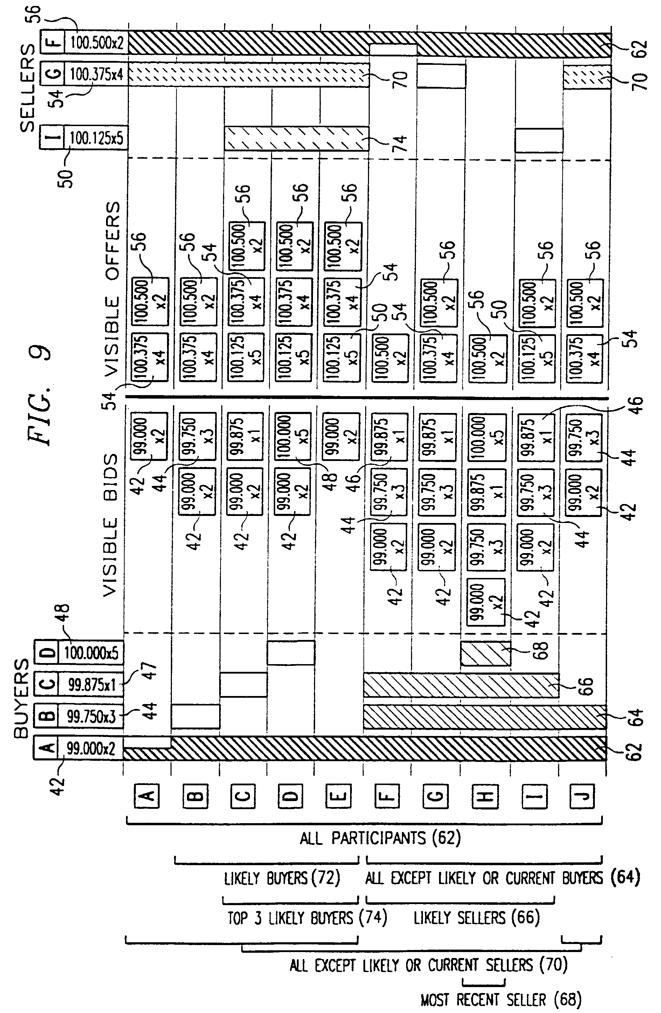

Figure 9 shows the market after this trade is completed. H's 100.25 offer (52) in Figure 3 is no longer in the system as shown in Figure 9. In addition, C's 99.875 bid (46) in Figure 3 is now a bid (47) for only $1 million in Figure 9. These changes can be seen in the "actual market" after this trade in the top row of Figure 9. The only visibility display that is affected by this transaction is that of user D, who is showing his buying order only to the seller in the most recent transaction. After this trade, the most recent seller is no longer I and is now instead H. Figure 9 in the row for participant H shows user H's market after the trade is completed. The 99.875 bid (47) of C is now for only $1 million, but D's 100 bid (48) for $5 million appears in front of this now. In addition, the best offer is now offer 56 at 100.5 since H has no further offer at 100.25. The next lower row in Figure 9 shows user I's market after this trade is processed. From user I's perspective the 100 bid (48) of user D disappeared and the 99.875 bid (46) is only for $1 million. Unless user I inserts an order to sell at 100, he would have no way of knowing whether or not D's 100 bid was still available.

To better illustrate the exact mechanism used herein, refer again to Figure 4, which depicts a flow chart of the order processing steps used in this particular embodiment of the invention. If user X makes any change to its orders, such as changing a bid or offer price or quantity, enters a new bid or offer, or cancels a bid or offer then first, a match is done in user X's market to check for any overlapping trades. If there is an overlapping trade then this trade is crossed. If a portion of the order remains, there is a query of any overlapping trades in the actual market. If any overlapping trades result the one with the greatest amount of overlap is processed with ties broken by time priority. Finally, analytics, visibility groups, and displays are updated. There are several reasons a display would change:
1) The unfilled portion of user X's order will be updated on displays for participants who are in the order's visibility group.
2) Any order that matched user X's order will be decreased or removed from displays of participants who were viewing that order.
3) User X may be reclassified into or out of other visibility groups, thereby affecting user X's view of other outstanding orders.
4) Other users may be reclassified into or out of other visibility groups, thereby affecting their view of other outstanding orders.

Alternatively, if the method of Figure 6 is used, the trade that occurred in this example would have instead taken place at 99.9375 (the middle of the overlap of 100 and 99.875). User C would be given the first choice to improve to this level and take the trade. If user C did not elect to take this trade then user D would get this price improvement in the trade.

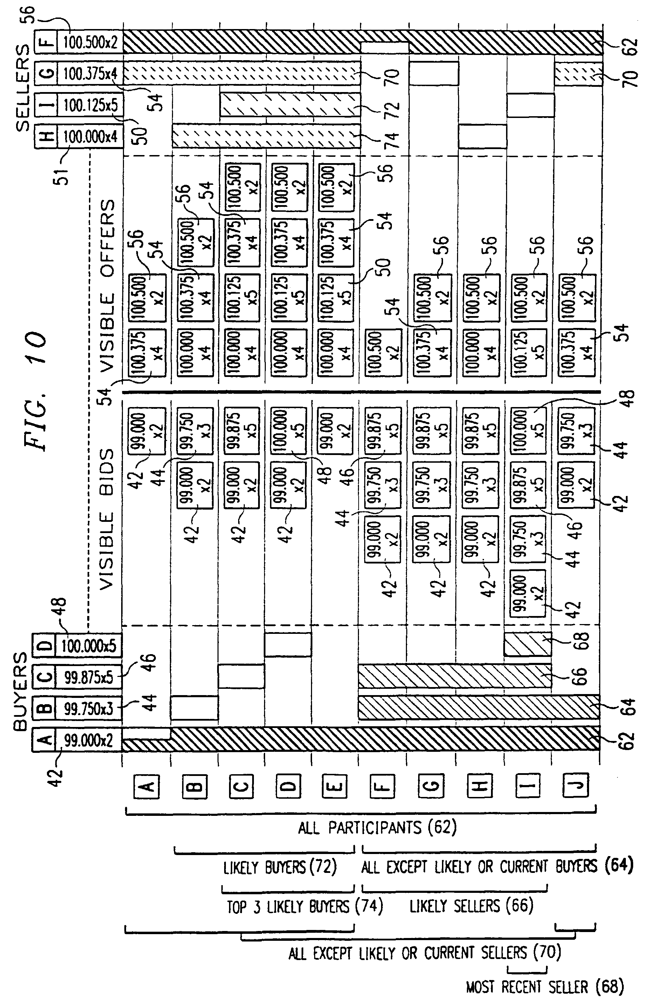

The third trade example is if H decides to change its selling order to 100 from 100.25. This is order 51. The intermediate result right after this order is processed is shown in Figure 10 (which is shown for explanatory purposes only; the actual limit order book would not actually hold the matched trades). As can be seen in the row for participant H, there is no match in user H's market which is the first step outlined in Figure 3. This is because the best bid in user H's market is bid 46 at 99.875 while the best offer is 100 (as shown in the row for participant H in Figure 10). However, there is a match in the "actual market" which is queried next according to the process shown in Figure 4. This is shown in the top of Figure 10 with the link between D's 100 bid (48) and H's 100 offer (51). Thus this trade occurs for $4 million in bonds.

The result of this trade to the visibility groups is that again:
1) H becomes the most recent seller instead of I.

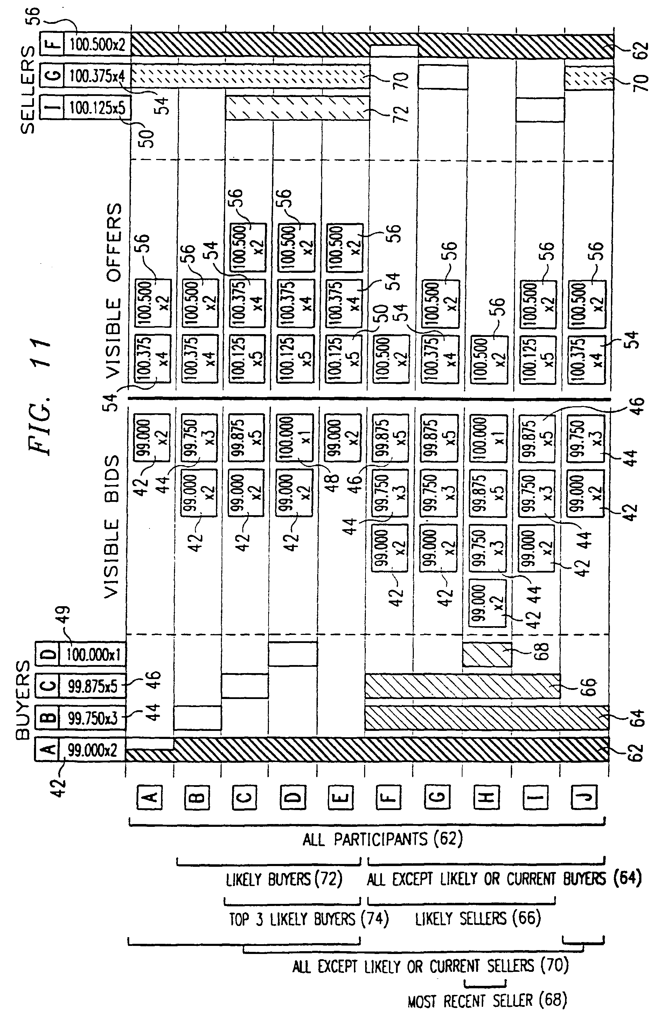

The "actual market" after this trade is shown across the top row in Figure 11. The changes are that H's sell order at 100.25 is no longer in the system and D now only has $1 million bonds left to buy at 100 (new bid 49). H is now the most recent seller and is displayed D's remaining buy order 49. In addition, D's remaining buy order is no longer visible to I. The market for user H is shown in Figure 11 in the row for participant H. The best bid is bid 49 at 100 for only $1 million. The best offer (56) is now at 100.5 since H has no further selling interest. The new market for user I is shown in Figure 11 in the row for participant I. The best bid for I is now 99.875 (bid 46) as D's remaining $1 million bid (49) is no longer visible to I.

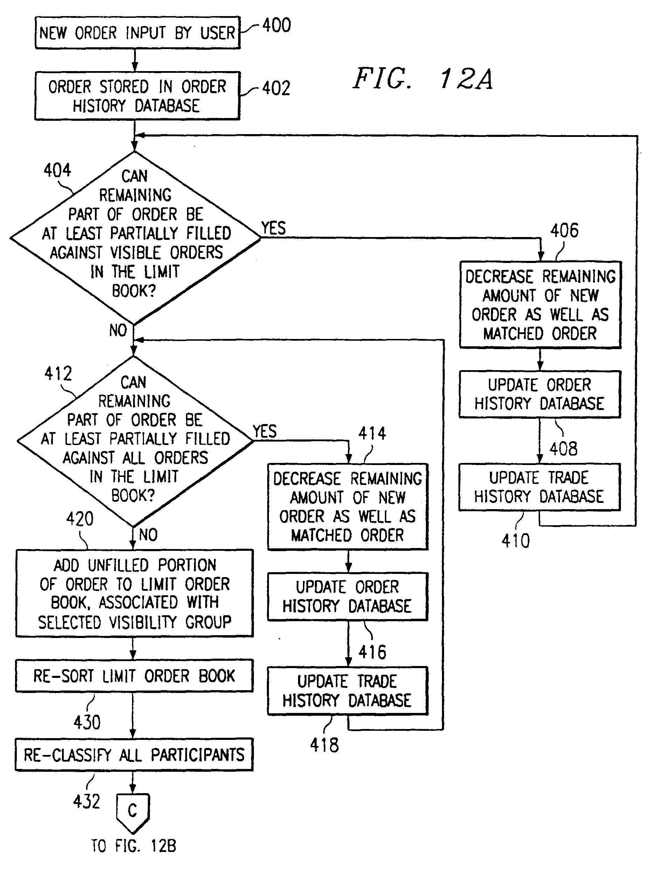

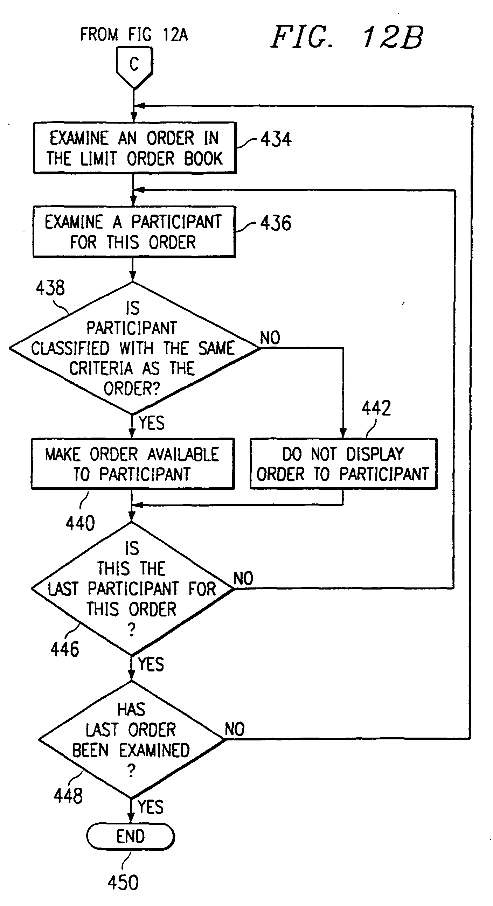

A further aspect of the present invention is the providing of the access to an order to select a participant after the order has been received. This process is described in reference to Figure 12. A new order is input at step 400 and this order is stored in the order history database as step 402. In question step 404, an inquiry is made to determine if the remaining part of the order can at least partially be filled against visible orders in the limit book. If the answer at step 404 is yes, entry is made to step 406 to decrease the remaining amount of the new order as well as the matched order. This is the consummation of a trade. Next, at step 408, the order history database is updated and at step 410 the trade history database is updated. Subsequently, entry is made back into the question step 404.

If the response to the question step 404 is no, entry is made to a question step 412 to determine if the remaining part of the order can be at least partially filled against all orders in the limit book. If the answer to this inquiry is yes, entry is made to the step 414 to decrease the remaining amount of the new order as well the matched order, thereby consummating a trade. Next, the order history is updated in the order history database at step 416 and in the trade history database at step 418 followed by re-entry to step 412.

If the response at question step 412 is no, entry is made to a step 420 to add the unfilled portion of the order to the limit order book and to associate it with a visibility group as specified with the order or as previously specified for this order and participant.

In the next step 430, the limit order book is resorted.

At step 432 all of the participants are classified according to the existing criteria in the system. Each participant that meets a particular criterion is tagged for that criterion.

At step 434, a first order in the limit book is examined. At step 436, the first participant for this order is examined. From step 436 entry is made to a question step 438 to determine if the current participant is classified with the same criteria as the order which was received at step 400. If the response is yes, entry is made to a step 440 to make the order available to this participant, either for access or direct transmission to this participant. If the response at question step 438 is no, entry is made to step 442 for the purpose of not displaying this order to that participant.

Following steps 440 and 442, entry is made to a question step 446 to determine if the last participant for the order has been examined. If the response to this inquiry is no, entry is made back to the step 436 to examine the next participant for this order and repeat the process to determine if this participant for this order meets the criteria for the received order. The process is continued to question block 446 until the last participant for this order is evaluated. At this point, the response is yes an entry is made to question block 448 to determine if the last order has been examined. If the response is no, entry is made back to the step 434 to repeat the process for each participant for the next order. After all participants for all orders have been evaluated and a display has been made available to those that meet the correct criteria, the yes exit is taken from question step 448 to an end step 450.

The process shown in Figure 12 differs from that previously described for the visibility groups in that each participant is examined for the correct criteria associated with an order after that order is entered, rather than generating a complete visibility group as changes are made for the visibility groups.

The visibility groups previously discussed were based upon certain criteria associated with facts pertaining to a participant. However, these criteria may also refer to specific participants, or groups of participants, which can be chosen by the user submitting an order. The identity of these participants remains anonymous to the user, who may select such participants by identifying particular visible orders or trades available to him through the system. Individual participants or groups of these participants are assigned "labels" for reference in specifying visibility groups on future orders. These visibility groups, of course, may simply consist of anonymous participants a user has chosen. Alternatively, the visibility groups might reference anonymous participants in a more complex way (e.g., a visibility group consisting of all likely buyers except for a selected anonymous participant).

Referring to figure 13A, at a step 458, the user selects a visible order such as, for example, order 42 in Figure 3. This selection might occur, for example, when a user uses a web browser and clicks on an order appearing on the screen. The order, in this case, was submitted by participant A, though the user does not realize this. At step 460, the user types a label that can be used to refer to this participant (A in this case) in the future. In step 470, the system writes a record in a database, indicating (until removal) that this particular user has associated the chosen label with the chosen participant. An alternative course of events begins at step 464, in which the user selects the (anonymous) buyer on a past visible trade. Again, the user types a label (step 460) and the system stores the association in the database (470). A third course of events begins at step 468, when the user selects the seller on a past visible trade. The actions taken by a user starting at steps 456, 462, and 466 may take place at any time, and this sequence may be repeated ad infinitum.

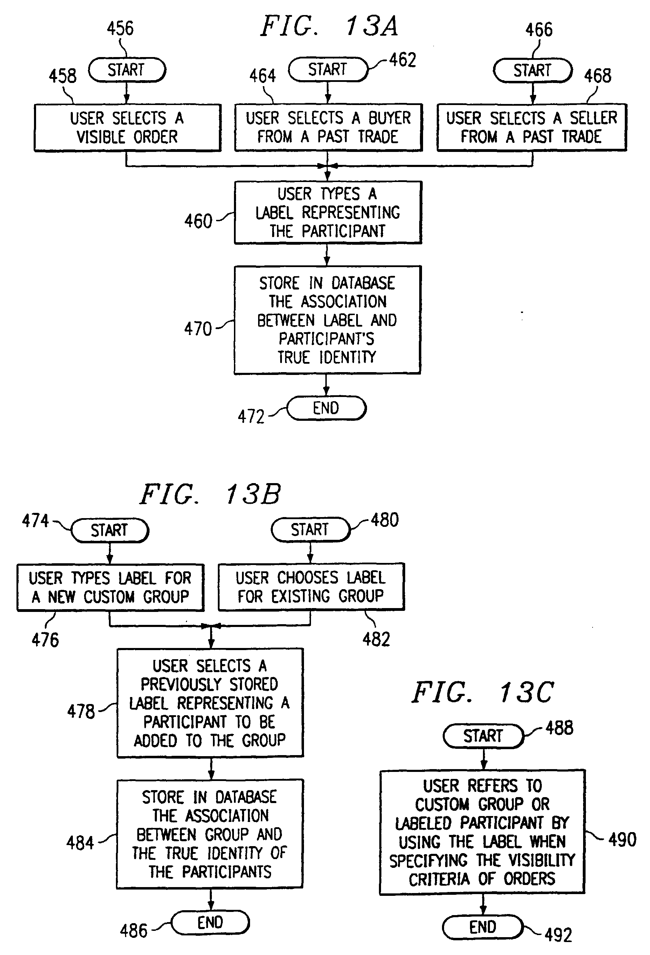

At any point in time after at least one anonymous participant has been labeled (as described in the previous paragraph), the user may type in a label for a new custom group, as shown in figure 13B at step 476. Subsequently, at step 478, the user selects a label previously assigned in step 460. In step 484, the system stores the user's association between the custom group and the true identity of the participant associated with the label chosen in step 478. Alternatively, if a new custom group has already been created as in step 476, a user may begin the sequence by choosing from existing custom group labels, as shown in step 482. Subsequently, the same course of events (steps 478 and 484) takes place. The actions starting with steps 476 and 482 may be taken by a user at any time (assuming at least one label has been assigned in step 460).

Figure 13C depicts the action taken when a user submits an order, and intends its visibility to be related to an anonymous participant or custom group. In step 490, the user specifies the visibility group for his order by entering criteria that refer to either anonymous participants (by typing the appropriate label) or custom groups (again, by typing the appropriate label), possibly in conjunction with other criteria.

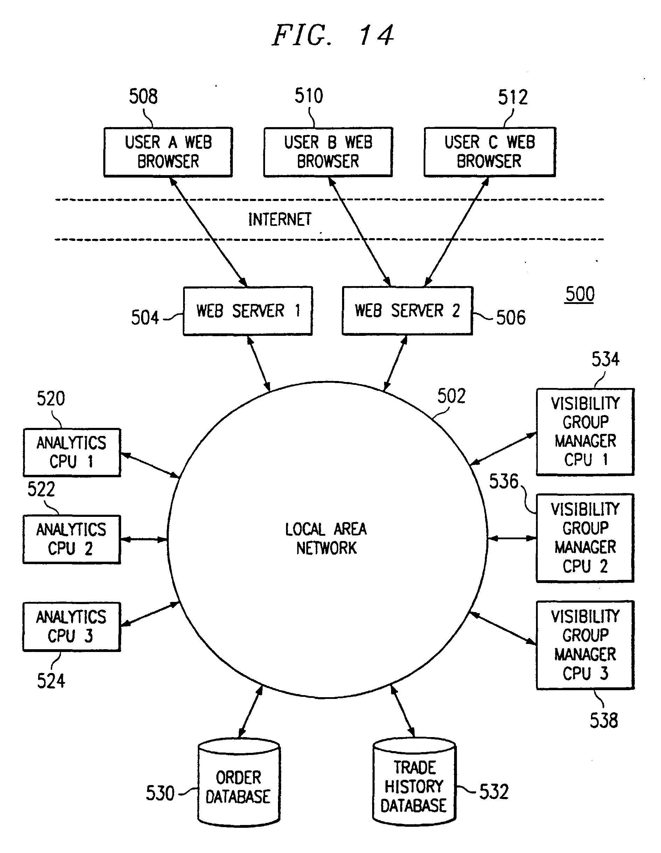

A network 500 in accordance with the present invention is shown in Figure 14. This works with the Internet and has user browsers 508, 510 and 512 which correspond to the user browsers shown in Figure 1.

A network 500 has web servers 504 and 506 that interconnect the local area network 502 through the Internet to each of the web browsers 508, 510 and 512.

Three analytic engines 520, 522 and 524 connect to the local area network 502. In this example, these correspond to the analytic engines 39A, 39B and 39C shown in Figure 2. In other configurations, however, there might be multiple analytics engines per CPU, or multiple CPUs per analytics engine. An order database 530 corresponds to the database 30 shown in Figure 1 and a trade history database 532 corresponds to the database 32 shown in Figure 1. The network 500 includes three visibility group managers 534, 536 and 538 for generating visibility groups as described herein such as groups 37A, 37B, 37C, 37D, 37E and 37F shown in Figure 2. Although network 500 is a representative hardware configuration of the present invention, the distribution of functions and data storage can be arranged in many different configurations as needed and as determined by the availability of resources for implementing the functions required for the present invention.

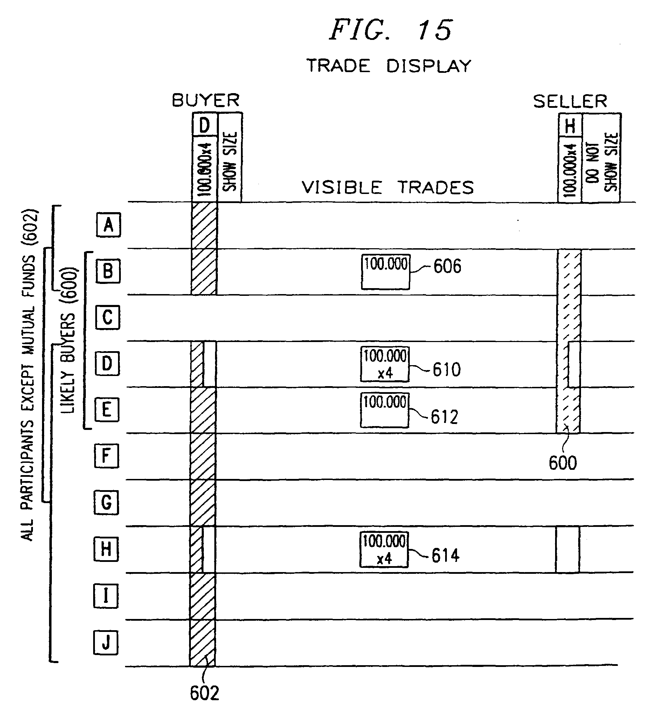

As noted above, an additional feature of the present invention is that participants can choose which other participants can see the results of a trade that occurs as a result of an order. The user specifies this at the time of the order. For example, in the trade that takes place as described in reference to Figures 10 and 11, user H specified that if that order resulted in a trade then this result would only be shown to a "Likely buyers" group 600 for this bond. This example is shown in Figure 15. Likewise, user C specified that any trade can be shown to "All participants except mutual finds" group 602. In this example, participant C is the only mutual find. However, since there are two participants in every trade, the procedure of the present invention takes the intersection of the two groups for trade display and displays the trade results to this new group. H has chosen to show the trade to "Likely buyers" while D has elected to show it to "All participants except mutual finds". Thus, the intersection of these two groups (600 and 602) is participants B, D, E, and H. As can be seen in the middle column titled "Visible Trades", participants B, D, E, and H are the only participants that see this trade, as shown by displays 606, 608, 610, and 612. The two participants in a given trade always see the fill trade results. In addition, a further embodiment of the invention allows a user the choice of whether to include the size of the trade or just the price for display purposes. In this case, the size of the trade ($4,000,000) would only be displayed if both participants agreed to display this information. In this particular example participant D chose to show the size of the trade while participant H chose not to show the size. Thus, the size is only displayed to the participants in the trade so that displays 606, and 610 only show the trade price and not the size. D and H see all the trade details since they were the parties involved in the trade.

In addition, it was described above that participants have the option of entering a minimum size requirement that is required for them to cross in the actual market. This is to protect them from other investors who are "fishing" for information by inserting very small orders. For instance, in the above example of Figure 3, assume each participant put a minimum size requirement of $1 million for matching with an order of a participant to which they chose not to display their order. Thus if user B, whose original market is shown in Figure 3 in the row for participant B, enters a selling order of $100,000 at 99.875, this order will not match with either C or D's bid. The reason B's new order does not result in a match is that B is not designated to see C or D's bid, and this new order does not meet the minimum $1 million size trade set by C and D. The only reason B would enter this new order is to check if there are any buy orders ahead of its own 99.75 bid. Thus, this minimum size requirement protects C and D from this risk of having their order disclosed to B. This minimum order size is not applicable to matches in user X's market. So, for instance if user H enters to sell $100,000 at 99.875 then this order is accepted because user H had access to the 99.875 bid in Figure 3. Thus, the minimum size only pertains to matches in the actual market with other users that are not designated to see this order.

The present invention provides a flexible method and system for the display of orders and trades, and for the matching of orders to fulfill trades. The features described above can be combined as desired to produce a wide variety of trading methods and systems.

Although several embodiments of the invention have been illustrated in the accompanying drawings and described in the foregoing Detailed Description, it will be understood that the invention is not limited to the embodiments disclosed, but is capable of numerous rearrangements, modifications and substitutions without departing from the scope of the invention.

## Claims

1. A method for providing order displays to participants in a market, comprising the steps of:
defining a plurality of dynamic criteria wherein each said dynamic criterion is based on activity in said market,
defining a plurality of visibility groups of said participants, wherein each said visibility group is based on at least one of said dynamic criteria, and the participants in said visibility group are subject to change over time,
receiving an order for an asset from a one of said participants,
associating said order with a one of said visibility groups, and
making at least a portion of said order available to each of said participants in said one visibility group.

2. A method for providing order displays as recited in Claim 1 wherein said one visibility group is selected in conjunction with said order

3. A method for providing order displays as recited in Claim 1 wherein said one visibility group is selected prior to receiving said order.

4. A method for providing order displays as recited in Claim 1 including the step of displaying at least a portion of said order to said recipients in said one visibility group.

5. A method for providing order displays as recited in Claim 1 wherein said one visibility group is defined before said order is received.

6. A method for providing order displays as recited in Claim 1 wherein said one visibility group is defined after said order is received.

7. A method for providing order displays as recited in Claim 1 wherein said step of making at least a portion of said order available to each of said participants comprises posting said at least a portion of said order for access by said participants in said one visibility group.

8. A method for providing order displays as recited in Claim 1 wherein said step of making at least a portion of said order available to each of said participants comprises transmitting said at least a portion of said order to said participants in said one visibility group.

9. A method for providing order displays as recited in Claim 1 including the step of storing said order in an order book which includes a listing for each of said orders and an identification of the participant who placed each order.

10. A method for providing order displays as recited in Claim 1 including the steps of:
modifying said one visibility group, after said step of making said order available to each of said participants, to add at least one new participant thereto, and
making at least a portion of said order available to said one new participant.

11. A method for providing order displays as recited in Claim 1 including the steps of:
modifying said one visibility group, after said step of making said order available to each of said participants, to delete at least one participant therefrom, and
canceling said availability of said at least a portion of said order which was previously available to said deleted participant.

12. A method for providing order displays as recited in Claim 1 including the steps of:
receiving a cancellation of said order, and
terminating the availability of said at least a portion of said order to said participants in said one visibility group in response to said cancellation.

13. A method for providing order displays as recited in Claim 1 including the steps of:
receiving a new visibility group designation from said one participant,
terminating the availability of said at least a portion of said order to said participants in said one visibility group in response to said receiving a new visibility group, and
making a least a portion of said order available to each of said participants in said new visibility group.

14. A method for providing order displays as recited in Claim 1 wherein said criteria for said one visibility group comprises participants corresponding to orders available to and designated by said one participant.

15. A method for providing order displays as recited in Claim 1 including the steps of:
receiving a second order for said security from said one participant,
associating said second order with a second of said visibility groups, and
making at least a portion of said order available to each of said participants in said second visibility group.

16. A method for providing order displays as recited in Claim 1 wherein a one of said criteria for classifying said participants is likely buyers.

17. A method for providing order displays as recited in Claim 1 wherein a one of said criteria for classifying said participants is a selected group of likely buyers.

18. A method for providing order displays as recited in Claim 1 wherein a one of said criteria for classifying said participants is those participants who are not likely or current buyers.

19. A method for providing order displays as recited in Claim 1 wherein a one of said criteria for classifying said participants is likely sellers.

20. A method for providing order displays as recited in Claim 1 wherein a one of said criteria for classifying said participants is the most recent sellers.

21. A method for providing order displays as recited in Claim 1 wherein a one of said criteria for classifying said participants is those participants who are not likely or current sellers.

22. A method for providing order displays as recited in Claim 1 wherein a one of said criteria for classifying said participants is the rating of the said participant as far as reliability as determined from their past trading behavior.

23. A method for providing order displays as recited in Claim 1 wherein a one of said criteria for classifying said participants is the likely amount of unit size that said participant will want to trade.

24. A method for providing order displays as recited in Claim 1 including the step of updating the participants in said visibility groups when facts change that relate to any of said criteria.

25. A method for providing order displays as recited in Claim 1 including the step of maintaining an order history file of said orders.

26. A method for providing order displays as recited in Claim 1 wherein said asset is a security.

27. A method for providing order displays as recited in Claim 1 wherein said asset is information or services available for sale and purchase.

28. A method for providing order displays as recited in Claim 1 wherein said asset is the usage of voice or data communication networks.

29. A method for providing order displays as recited in Claim 1 wherein said asset is electric power.

30. A method for providing order displays as recited in Claim 1 wherein said asset is a security and said order is an expression of interest to trade in said security.

31. A method for providing order displays as recited in Claim 1 wherein said asset is a security and said order includes a firm commitment to trade at a unit price for said security and quantity of said security.

32. A method for providing order displays as recited in Claim 1 wherein said asset is a security and said order includes an identification of said security, a maximum quantity of said security to be traded, an indication of buy or sell for the security and a minimum price for a sale or a maximum price for a buy.

33. A method for providing order displays as recited in Claim 1 wherein said asset is a security and said order includes a minimum size requirement that must be met for a trade with an invisible order in said security.

34. A method for providing order displays as recited in Claim 1 including the steps of:
defining a second visibility group of said participants, wherein said second visibility group comprises the ones of said participants which have placed orders that are available for display to a second of said participants and which have been selected by said second participants,
receiving an order for an asset from said second participant, wherein said second participant order is associated with said second visibility group, and
making at least a port on of said second participant order available to each of said participants in said second visibility group.

35. A method of providing order displays as recited in Claim 1 including the steps of:
establishing a trade history of trades fulfilled between participants in said market,
defining a second visibility group of said participants, wherein said second visibility group comprises the ones of said participants, either a buyer or seller, corresponding to said trades in said trade history and which have been selected by a second of said participants,
receiving an order for an asset from said second participant, wherein said second participant order is associated with said second visibility group, and
making at least a portion of said second participant order available to each of said participants in said second visibility group.

36. A method for providing order displays to participants in a market in which the participants submit orders for assets, comprising the steps of,
defining a visibility group of said participants, wherein said visibility group comprises the ones of said participants which have placed orders that are available for display to a first of said participants and which have been selected by said first participant,
receiving a first order for an asset from said first participant, wherein said first order is associated with said visibility group, and
making at least a portion of said first order available to each of said participants in said visibility group, wherein said portion does not include information identifying the participants who have available said at least a portion of said order.

37. A method for providing order displays to participants in a market in which the participants submit orders for assets, comprising the steps of:
establishing a trade history of trades fulfilled between participants in said market,
defining a visibility group of said participants, wherein said visibility group comprises the ones of said participants, either buyers or sellers, corresponding to said trades in said trade history and which have been selected by a first of said participants,
receiving a first order for an asset from said first participant, wherein said first order is associated with said visibility group, and
making at least a portion of said first order available to each of said participants in said visibility group.

38. A method for providing order displays to participants in a market, comprising the steps of,
defining a plurality of dynamic criteria wherein each said dynamic criterion is based on activity in said market,
classifying each of said participants according to each of a plurality of criteria,
receiving an order for a security from a one of said participants,
associating one of said criteria with said order,
selecting the ones of said participants that correspond to said one dynamic criterion, and
making at least a portion of said order available to each of said selected participants.

39. A method for providing order displays as recited in Claim 38 wherein said one criteria is selected prior to receiving said order.

40. A method for providing order displays as recited in Claim 38 wherein said one criteria is selected prior to receiving said order.

41. A method of providing order displays as recited in Claim 38 including the step of displaying at least a portion of each of said orders to said selected recipients.

42. A method of providing order displays as recited in Claim 38 including the step of storing said order in an order book which includes a listing for each of said orders and an identification of the participant who placed each order.

43. A method for providing order displays as recited in Claim 38 including the steps of:
classifying said participants according to said one criteria to specify at least one new participant for said one criteria, and
making at least a portion of said order available to said new participant.

44. A method for providing order displays as recited in Claim 38 including the steps of:
classifying said participants according to said one criteria to delete at least one participant for said one criteria, and
canceling said availability of said at least a portion of said order which was previously available to said deleted participant.

45. A method for providing order displays as recited in Claim 38 wherein a one of said criteria for classifying said participants is likely buyers.

46. A method for providing order displays as recited in Claim 38 wherein a one of said criteria for classifying said participants is a selected group of likely buyers.

47. A method for providing order displays as recited in Claim 38 wherein a one of said criteria for classifying said participants is those participants who are not likely or current buyers.

48. A method for providing order displays as recited in Claim 38 wherein a one of said criteria for classifying said participants is likely sellers.

49. A method for providing order displays as recited in Claim 38 wherein a one of said criteria for classifying said participants is the most recent sellers.

50. A method for providing order displays as recited in Claim 38 wherein a one of said criteria for classifying said participants is those participants who are not likely or current sellers.

51. A system for providing order displays to participants in a market, comprising:
a server for providing communications with said participants, including receiving orders for securities from said participants,
an order database which includes an order book for storing each outstanding order received from said participants, and
an order processor for producing a plurality of visibility groups of said participants wherein each said visibility group is based on at least one of a plurality of dynamic criteria which criteria are based on activity in said market and the participants in said visibility groups are subject to change over time; for receiving a specific order via said server from a participant wherein said specific order is associated with a one of said visibility groups; and
a display filter for making at least a portion of said specific order available via said server to each of the participants in said one visibility group.

52. A system as recited in Claim 51 including a trade history database for recording each of said orders which has been fulfilled and identifying the participants for each said fulfilled order.

53. A system as recited in Claim 51 including at least one analytic engine for updating said visibility groups when at least one of said criterion changes for a participant.

54. A method for trading assets in a market having a plurality of participants, comprising the steps of:
defining a plurality of dynamic criteria wherein each said dynamic criterion is based on activity in said market,
defining a plurality of visibility groups of said participants, wherein each said visibility group is based on at least one of said dynamic criterion and the participants in said visibility groups are subject to change over time,
receiving respective orders for a particular asset from a plurality of said participants, wherein each said order is associated with a one of said visibility groups,
making at least a portion of each said order available to each of said participants in the visibility group associated with the order, and
matching orders received from said participants and fulfilling a trade for said matched orders between the participants who submitted the matched orders.

55. A method for trading assets as recited in Claim 54 in which each said order includes a price and wherein said step of matching orders comprises identifying two orders having the same unit value.

56. A method for trading assets as recited in Claim 54 wherein said assets are securities.

57. A method of trading assets as recited in Claim 54 wherein said step of matching orders is limited to participants which had available at least one of said at least a portion of said order.

58. A method of trading assets as recited in Claim 54 wherein said asset is a security and said order includes a minimum size requirement that must be met for a trade with an invisible order in said security.

59. A method for trading assets as recited in Claim 54 wherein said step of matching orders includes the matching of orders which have been made available and which are not available to said participants.

60. A method for trading assets as recited in Claim 54 wherein a first participant submits an order which is invisible to a second participant, and a second participant submits a counter-order with a price more favorable to said first participant than the price for said first order, and said step of matching orders comprises determining an intermediate trade price which is between the price of said first order and said second order, and fulfilling said trade for said first and said second orders at said intermediate trade price.

61. A method for trading assets as recited in Claim 60 wherein a third participant submits an order (of the same nature as said first order, but visible to said second participant) with price equal to the price on said second order, and said step of matching orders comprises fulfilling said trade for said second and said third orders at the common price.

62. A method for trading assets as recited in Claim 60 wherein a third participant submits an order (of the same nature as said first order, but visible to said second participant) with price equal to the price on said second order, and said step of matching orders comprises interactively querying said third participant with an option to trade at said intermediate trade price, and if said third participant accepts said option, fulfilling said trade for said second and said third orders at the intermediate trade price, and if said third participant does not accept said option, fulfilling said trade for said first and said second orders at the intermediate trade price.

63. A system for trading assets in a market having a plurality of participants, comprising:
a server for providing communications with said participants, including receiving orders for said assets from said participants,
an order database which includes an order book for storing each outstanding order received from said participants, and
an order processor for producing a plurality of visibility groups of said participants wherein each said visibility group is based on at least one of a plurality of dynamic criteria which criteria are based on activity in said market and the participants in said visibility group are subject to change over time; for receiving a specific order via said server from a participant wherein said specific order is associated with a one of said visibility groups;
a display filter for making at least a portion of said specific order available via said server to each of the participants in said one visibility group, and
said order processor coupled to said order database for matching orders received from said participants and fulfilling a trade for said matched orders between the participants who submitted the matched orders.

64. A system for trading assets as recited in Claim 63 including a trade history database.

65. A system for trading assets as recited in Claim 63 wherein said assets are securities.

66. A method for providing trade displays to participants in a market, comprising the steps of:
receiving first and second orders for an asset respectively from a first and a second of said participants,
defining a plurality of trade display groups of said participants, wherein said trade display groups are based on criteria specified by said participants,
associating said first and second orders respectively with a first and a second of said trade display groups,
establishing a trade for said first and second orders, and
making information relating to said trade available to the ones of said participants who are in both said first trade display group and said second trade display group.

67. A method for providing trade displays as recited in Claim 65 wherein said asset is a security.

68. A method for providing trade displays as recited in Claim 66 wherein said first and second orders are further associated with a yes/no show size parameter and wherein said information relating to said trade includes the trade quantity if and only if both orders have said show size parameter set to yes.

69. A method for providing order displays to participants in a market comprising the steps of:
defining a plurality of static criteria wherein each said static criterion is based on the identity of a participant,
defining a visibility group of said participants, wherein said visibility group is based on a plurality of said static criteria,
receiving an order for an asset from a one of said participants,
associating said order with said visibility group, and
making at least a portion of said order available to each of said participants in said one visibility group.
